# EUROPEAN PATENT APPLICATION

(11) **EP 4 456 254 A1**
(43) Date of publication of application: **30.10.2024**
(21) Application number: 23170143.4
(22) Date of filing: 26.04.2023
(51) Int. Cl.: H01M 10/613, H01M 50/204, H01M 50/249

(54) **A BATTERY PACK**

(71) Applicant: Newfrey LLC, New Britain, CT 06053 (US)
(72) Inventor: AKBARINIA, Alireza, 35394 Gießen (DE); WISSLING, Matthias, 35394 Gießen (DE)
(74) Representative: SBD IPAdmin

(57) **Abstract**

A battery pack is disclosed comprising a housing having a base extending in a plane, and first and second modules each having one or more battery cells, the first and second modules being at least partly surrounded by the housing and arranged above the base. A cooling element is arranged between the first and second modules, the cooling element is connected to the housing, and a heat conductor is arranged to extend across at least part of the first module and/or the second module, wherein the heat conductor is in contact with the cooling element to transfer heat to the cooling element.

## Description

The present invention relates to a battery pack. In particular, the present invention relates to a cooling element and a heat conductor for a battery pack.

### BACKGROUND

The continuous development of battery packs with ever increasing capacity is associated with great demands on safety. Managing heat dissipation is critical, in particular for high-capacity batteries such as battery packs used in electric vehicles. Sub-optimal heat management may cause thermal events such as thermal runaway in lithium-ion batteries, which is a chain reaction within a battery cell that can be difficult to stop once it has started. It occurs when the temperature inside a battery reaches a point that causes a chemical reaction to occur inside the battery, resulting in an uncontrollable, self-heating state. At the same time, it is desirable to maintain a compact form factor of the battery pack, as well as low weight and low cost, particularly in electric vehicle applications. Previous attempts to address the risk of thermal events have however also been suboptimal in this regard, further hindering the development in this field.

Examples of the present invention aim to address the aforementioned problems.

According to a first aspect of the present invention, there is provided a battery pack comprising a housing having a base extending in a plane; first and second modules each having one or more battery cells, the first and second modules being at least partly surrounded by the housing and arranged above the base; a cooling element arranged between the first and second modules, the cooling element is connected to the housing, and a heat conductor arranged to extend across at least part of the first module and/or the second module, wherein the heat conductor is in contact with the cooling element to transfer heat to the cooling element.

Optionally, the cooling element is a support structure for the first and second modules, and/or a support structure for the housing.

Optionally, the cooling element is configured for passive transfer of heat away from the first and second modules.

Optionally, the cooling element extends along a first direction parallel to the plane and along a second direction parallel to the plane, the second direction being perpendicular to the first direction.

Optionally, the cooling element extends around at least two sides of the first module and/or the second module.

Optionally, the cooling element is connected to the base and extends along the first module and/or the second module in parallel with a normal of the plane.

Optionally, the cooling element extends between opposite sides of the housing.

Optionally, the cooling element is arranged at opposite sides of the first module and/or the second module.

Optionally, the first and second modules are arranged between the heat conductor and the base.

Optionally, the heat conductor is arranged between the first and second module and the base.

Optionally, the heat conductor extends in a first longitudinal direction across the first module and/or the second module, parallel to the plane, and in a second longitudinal direction between the first module and/or the second module and the cooling element, the second longitudinal direction is perpendicular to the first longitudinal direction and parallel to a normal of the plane.

Optionally, the battery cells are arranged in an enclosure of the respective first and second modules, the heat conductor is arranged against an outer surface of the enclosure.

Optionally, the heat conductor comprises a plate of material having a thickness in the range of 0.1 - 5 mm.

Optionally, the heat conductor comprises a material having a thermal conductivity above 100 Wm-1K-1.

Optionally, the cooling element is configured to actively transfer heat away from the first and second modules.

Optionally, the cooling element comprises conduit for circulating cooling medium.

In a second aspect of the invention, there is provided an electric vehicle comprising a battery pack according to the first aspect.

In a third aspect of the invention, there is provided a method of manufacturing a battery pack comprising arranging first and second modules with battery cells above a base of a housing, the base extending in a plane, whereby the first and second modules are at least partly surrounded by the housing, arranging a cooling element to extend between the first and second modules and to connect to the housing, and arranging a heat conductor to extend across at least part of the first module and/or the second module and to contact the cooling element to transfer heat to the cooling element.

In a fourth aspect of the invention, there is provided a battery pack comprising first and second modules with battery cells, the first and second modules being at least partly surrounded by a housing and arranged above a base of the housing, and a cooling element arranged between the first and second modules, wherein the cooling element is configured to actively cool the first and second modules.

Various other aspects and further examples are also described in the following detailed description and in the attached claims with reference to the accompanying drawings, in which:

### FIGURES & DESCRIPTION

Figure 1 shows a cross-sectional schematic side view of a battery pack according to an example;
Figure 2 shows a perspective view of a battery pack;
Figure 3 shows a perspective view of a detail of a battery pack according to an example;
Figures 4a and 4b show a schematic top-down view and a cross-sectional schematic side view of a battery pack according to examples of the disclosure;
Figure 5 shows a schematic top-down view of a battery pack according to an example;
Figure 6 shows a cross-sectional schematic side view of a battery pack according to an example;
Figure 7 shows a cross-sectional schematic side view of a battery pack according to an example;
Figure 8 shows a cross-sectional schematic side view of a battery pack according to an example;
Figures 9 and 10 show cross-sectional schematic side views of a battery pack according to examples of the disclosure;
Figures 11 and 12 show cross-sectional schematic side views of a battery pack according to examples of the disclosure;
Figure 13 shows a cross-sectional schematic side view of a battery pack according to an example; and
Figure 14 shows a flow chart of a method of manufacturing a battery pack according to an example.

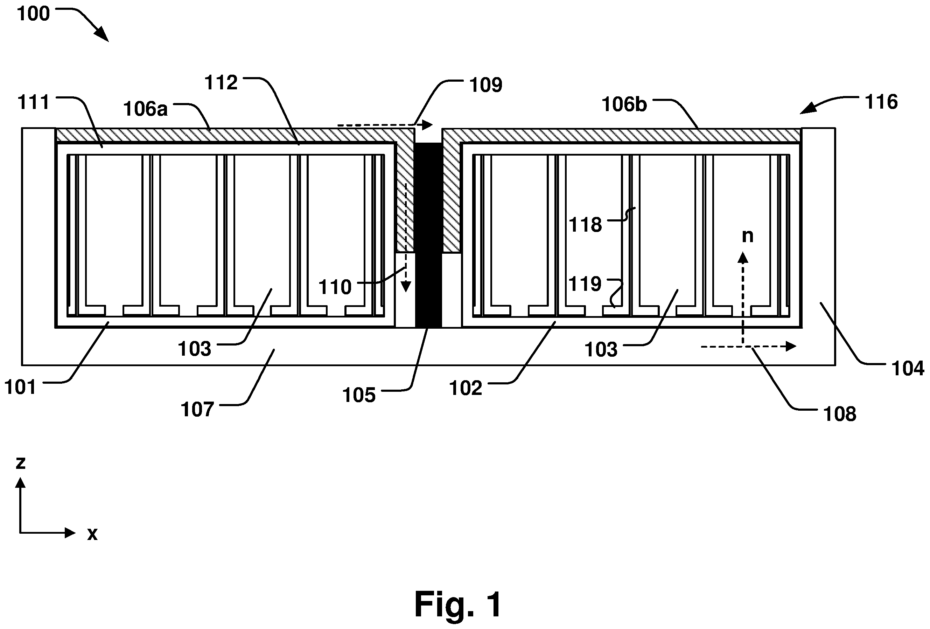

Figure 1 shows a cross-sectional schematic side view of a battery pack 100. The battery pack 100 comprises a housing 104. The housing 104 comprises a base 107 that extends in a plane 108. The battery pack 100 comprises a first module 101 and a second module 102, each having one or more battery cells 103. The first and second modules 101, 102, are at least partly surrounded by the housing 104 and arranged above the base 107. The battery pack 100 comprises a cooling element 105 arranged between the first and second modules 101, 102. The cooling element 105 is connected to the housing 104. The battery pack 100 comprises a heat conductor 106a, 106b, arranged to extend across at least part of the first module 101 and/or the second module 102. The example in Fig. 1 shows first and second heat conductors 106a, 106b, extending across at least part of the first module 101 and the second module 102. Heat generated from the battery cells 103 is transferred from the first and second modules 101, 102, to the respective adjacent heat conductors 106a, 106b. The heat conductors 106a, 106b, are in contact with the cooling element 105 to transfer the heat to the cooling element 105. The heat dissipates from the cooling element 105, for example via passive thermal conduction or active transfer of heat as described further in examples below.

Having a heat conductor 106a, 106b, arranged to extend across at least part of the first module 101 and/or the second module 102 increases the surface area over which the generated heat may dissipate. Further, by having the heat conductor 106a, 106b, in thermal contact with the cooling element 105, the heat can be reliably transferred away from the heat conductor 106a, 106b. By allowing the generated heat to dissipate with a fast rate over an increased surface area the risk of generating local spots of high temperature peaks is reduced during certain operating conditions of the battery pack 100, e.g. during peak power outtake. The risk of thermal runaway is therefore reduced and the battery pack 100 provides for a safer operation. A more homogeneous temperature distribution provides also for higher efficiency and for increasing the lifetime of the battery cells 103.

Moreover, having the cooling element 105 arranged between the first and second modules 101, 102, allows for an effective dissipation of heat from the latter while providing for an advantageous form factor of the battery pack 100. In particular, the height of the battery pack 100 can be reduced, i.e. in the z-direction in Figure 1, since the number of cooling elements previously stacked on the base 107 of the housing 104 can be reduced. The battery pack 100 allows for a form factor which is particularly advantageous in some applications, such as for electric vehicles.

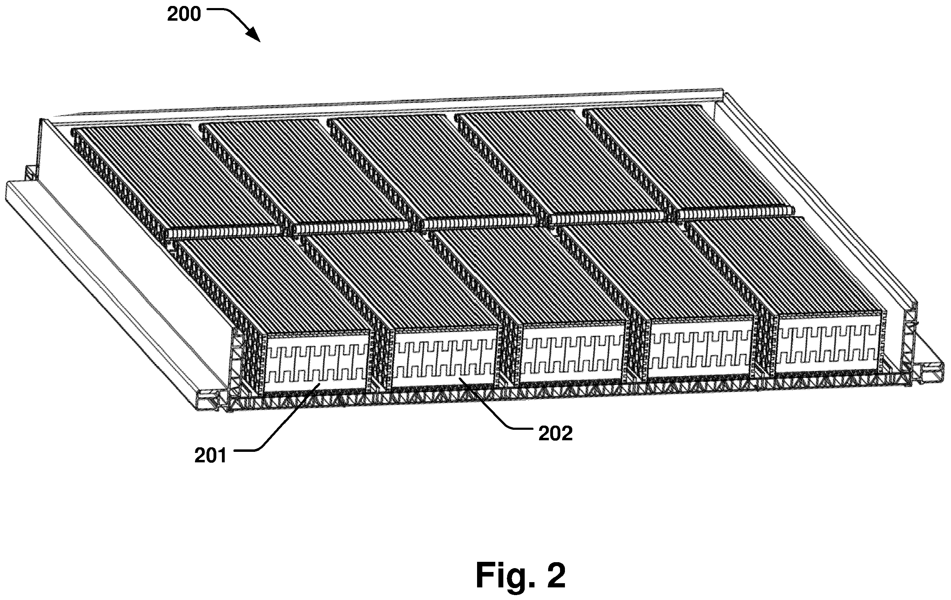

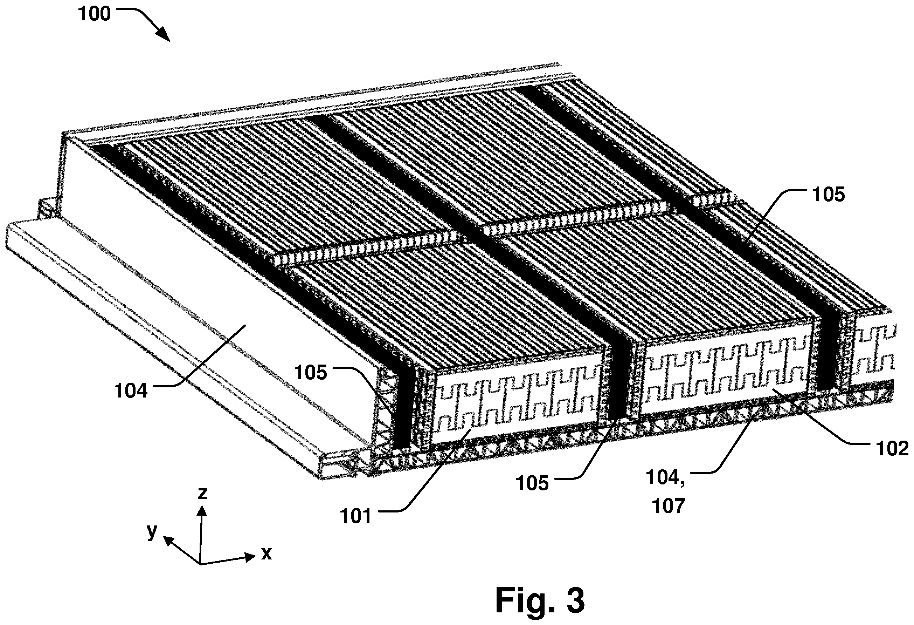

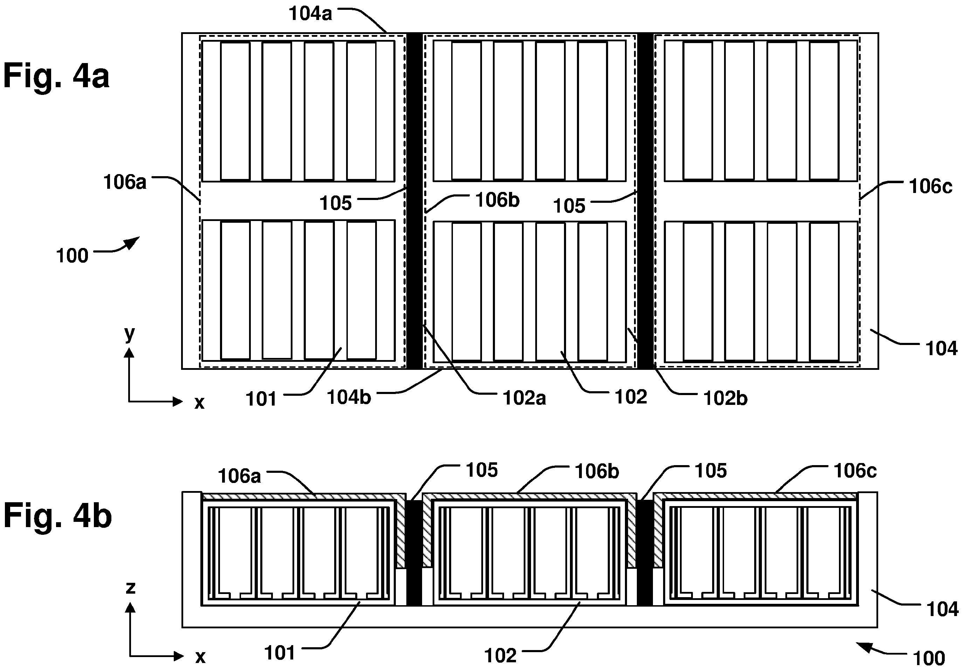

Figure 2 is a perspective view of a battery pack 200 with a plurality of modules 201, 202, having respective battery cells. Figure 3 shows an example of a battery pack 100 having a cooling element 105 arranged in between the modules 101, 102, for the advantageous benefits as described above. The heat conductor 106a, 106b, has been omitted in Figure 3 for the sake of clarity but it should be understood that the heat conductor 106a, 106b, may be arranged as described in relation to Figure 1. Figures 4a-b show a schematic top-down view (a) and a cross-sectional schematic side view (b) of a battery pack 100. The battery pack 100 as exemplified in the perspective view of Figure 3 may have heat conductors 106a, 106b, 106c, as exemplified in Figures 4a-b.

It should be understood that the battery pack 100 may comprise any plurality of first and / second modules 101, 102, as well as any plurality of heat conductors 106a, 106b, and cooling elements 105. Examples of arrangements of the heat conductor 106a, 106b, and of the cooling element 105 will be described in the following.

The cooling element 105 may be a support structure for the housing 104, such as a cross beam for providing structural integrity to the housing 104. The cooling element 105 may extend between opposite sides 104a, 104b of the housing 104, as described further below (see e.g. Fig. 4a), and may thus serve as a support structure for the housing 104. Such support structure may thus be utilized to transfer the generated heat away from the first and second modules 101, 102, via the heat conductor 106a, 106b. Further, the cooling element 105 may be connected to the housing 104 along its length, between the opposite sides 104a, 104b, to maximize the surface area over which the heat may be transferred and thereby the rate of heat transfer. The heat may thus be effectively transferred from the battery cells 103 to the housing 104 while keeping the number of separate elements of the battery pack 100 at a minimum. This provides for a robust yet light battery pack 100 and reduced manufacturing costs. Alternatively, or in addition, the cooling element 105 may be a support structure or holder for keeping the first and second modules 101, 102, in the correct positions in the housing 104, or otherwise supporting the first and second modules 101, 102.

The cooling element 105 may be configured for passive transfer of heat away from the first and second modules 101, 102. The cooling element 105 may thus be formed of a material having a thermal conductivity which is suitable for effective transfer of heat away from the first and second modules 101, 102. The cooling element 105 may comprise a material having a thermal conductivity above 100 Wm⁻¹K⁻¹. More advantageously the cooling element 105 may comprise a material having a thermal conductivity above 200 Wm⁻¹K⁻¹. The cooling element 105 may be formed of copper, aluminium, silicon carbide, graphite, gold or gold plated metal, or any combinations thereof.

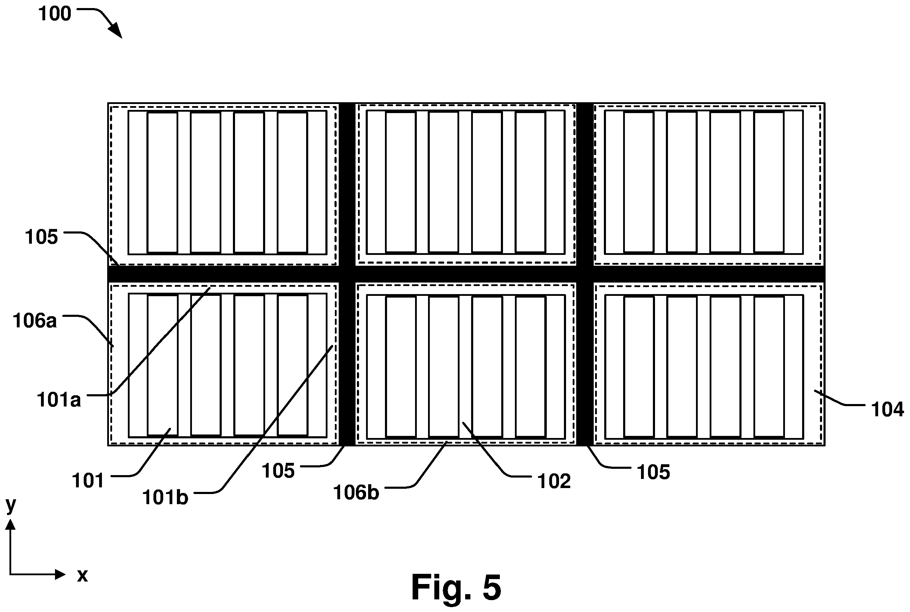

The cooling element 105 may extend along a first direction (x) parallel to the plane 108 and along a second direction (y) parallel to the plane 108, where the second direction (y) is perpendicular to the first direction (x). The top-down view in Figure 5 shows an example where the cooling element 105 extends in such first and second perpendicular directions (x, y). The cooling element 105 may be a single monolithic unit extending in first and second perpendicular directions (x, y). The battery pack 100 may comprise a plurality of cooling elements 105, joined together or spaced apart, while arranged to extend in first and second perpendicular directions (x, y). Regardless, the cooling element 105 may be arranged to extend in more than one direction across the base 107 of the housing 104, and in between a plurality of modules having battery cells 103, such as in between the first and second modules 101, 102, as schematically illustrated in Figure 5. This provides for increasing the surface area of the cooling element 105 and thereby allowing for a higher heat transfer rate of the heat generated from the battery cells 103, which is to be dissipated via the heat conductor 106a, 106b, and the cooling element 105 to the housing 104. The heat conductor 106a, 106b, is illustrated with dashed lines in the top-down view of Figure 5. First and second heat conductors 106a and 106b are indicated to be arranged across the first and second modules 101, 102, but it should be understood that each of the plurality of modules may have such associated heat conductor contacting the cooling element 105.

The cooling element 105 may extend around at least two sides 101a, 101b of the first module 101 and/or the second module 102. Figure 5 shows an example where the cooling element 105 extends along first and second sides 101a, 101b, of the first module 101. The first and second sides 101a, 101b, may thus be vertical upright sides of the first module 101 and/or the second module 102, extending from the base 107 in a direction of the normal (n) as seen in the cross-sectional view of Figure 1. Having a cooling element 105 extending around at least two sides 101a, 101b, of the first module 101 and/or the second module 102 allows for more efficient transfer of heat from the first module 101 and/or the second module 102 to the cooling element 105.

The example in Figure 5 shows a cooling element 105 which extends around at least two sides 101a, 101b, of the first module 101 and/or the second module 102 that are perpendicular, i.e. extending in perpendicular directions (x, y) in the plane 108. The cooling element 105 may however also be arranged at opposite sides 102a, 102b, of the first module 101 and/or the second module 102. The opposite sides 102a, 102b, may also be the vertical upright sides of the first module 101 and/or the second module 102, extending from the base 107. Figures 4a-b show an example where the second module 102 has a cooling element 105 extending along opposite sides 102a and 102b. The heat conductor 106a, 106b, is illustrated with dashed lines in the top-down view of Figure 4a. The cooling element 105 may also extend between the first module 101 and/or the second module 102a and a side 104a, 104b, of the housing 104. The side 104a, 104b, of the housing 104 may extend from the base 107 in a direction of the normal (n). First and second heat conductors 106a and 106b are indicated to be arranged across the first and second modules 101, 102, but it should be understood that each of the plurality of modules may have an associated heat conductor contacting the cooling element 105.

The cooling element 105 may be connected to the base 107 and extend along the first module 101 and/or the second module 102 in parallel with a normal (n) of the plane 108, e.g. as shown in the examples in Figures 1, 3, 4b, 6 - 13. The cooling element 105 may have a height corresponding essentially to the height of first and second modules 101, 102, above the base 107. This provides for maximizing the surface area and volume of the cooling element 105 allowing for higher rate of heat transfer and for greater volumetric heat capacity which is particularly advantageous in case of utilizing the cooling element 105 for passive thermal conduction. It is conceivable that the cooling element 105 or at least part thereof may have an elongated extension also in a direction parallel with the plane 108 in one example.

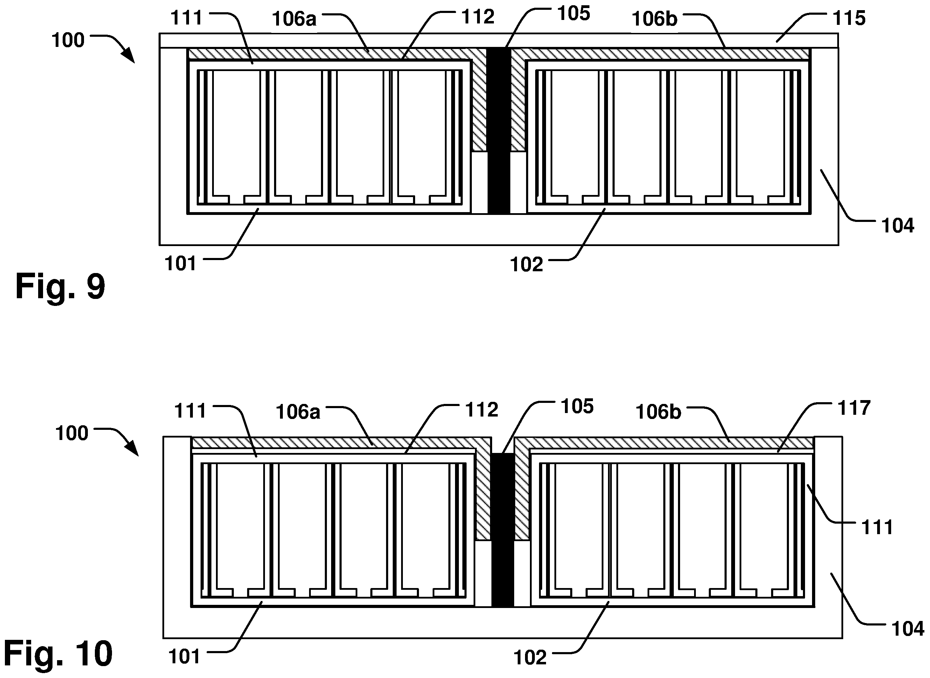

The cooling element 105 may be a support structure for the first and second modules 101, 102, and/or a support structure for the housing 104 in any of the above described examples. The cooling element 105 may extend between opposite sides 104a, 104b of the housing 104, as exemplified in Figure 4a, which may also be advantageous in terms of structural integrity of the battery pack 100. The cooling element 105 may also extend between the base 107 and a top lid 115 of the housing 104, as schematically illustrated in Fig. 9. The top lid 115 may be providing sealing of the battery cells 103. The cooling element 105 may serve as a support structure for the top lid 115, providing for a more robust battery pack 100 with improved thermal management as described above.

The first and second modules 101, 102 may be arranged between the heat conductor 106, 106a, 106b and the base 107, as schematically shown in the examples of Figures 1, 4b, 6, 9, 10, and 13. The heat conductor 106, 106a, 106b, may thus be arranged on top of the modules of the battery pack 100 such as on top of the first and second modules 101, 102. An efficient transfer of the heat at an upper part 116 of the battery pack 100 to the cooling element 105 is thus provided via the heat conductor 106, 106a, 106b. The heat conductor 106, 106a, 106b, may be arranged to extend across the width of the first module 101 and/or the second module 102 along first and second directions (x, y) of the plane 108, such as across essentially the full width of the first module 101 and/or the second module 102 along first and second directions (x, y). Figures 4a-b show an example where the heat conductor 106a, 106b, 106c, extends across the full width of the modules of the battery pack 100 such as modules 101 and 102. This allows for a uniform dissipation of the heat from the first and second modules 101, 102. In some examples however the heat conductor 106, 106a, 106b, 106c, may extend across part of the width of the first and second modules 101, 102 along the first and second directions (x, y) of the plane 108.

The heat conductor 106, 106a, 106b, may extend in a first longitudinal direction 109 across the first module 101 and/or the second module 102, parallel to the plane 108, and in a second longitudinal direction 110 between the first module 101 and/or the second module 102 and the cooling element 105. The second longitudinal direction 110 is perpendicular to the first longitudinal direction 109 and parallel to a normal (n) of the plane 108. Fig. 1 shows an example of the heat conductor 106a, 106b, extending in first and second longitudinal directions 109, 110. The heat conductor 106a, 106b, may be L-shaped in such cases. Having the heat conductor 106a, 106b, extending in a second longitudinal direction 110 between the first module 101 and/or the second module 102 and the cooling element 105 provides for increasing the contact area between the heat conductor 106a, 106b, and the cooling element 105. This allows for a more efficient transfer of heat to the cooling element 105. The L-shaped heat conductor 106a, 106b, may be a single integral piece as exemplified in Figure 1.

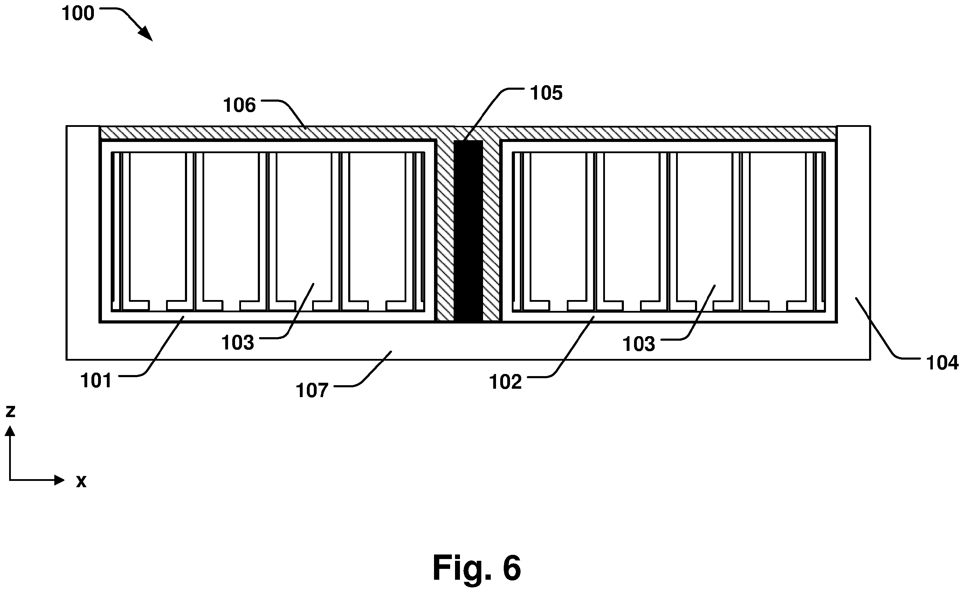

The heat conductor 106, 106a, 106b, may extend in the second longitudinal direction 110 along essentially the full height of the cooling element 105. This provides for maximizing the contact area between the heat conductor 106, 106a, 106b, and the cooling element 105. Figure 6 shows an example where a heat conductor 106 extends between the first module 101 and the cooling element 105 with a length corresponding to the height of the cooling element 105 above the base 107.

The heat conductor 106 is a single integral piece in this example and extends similarly between the second module 102 and the cooling element 105.

The heat conductor 106, 106a, 106b, may be a solid planar element. In another example the heat conductor 106, 106a, 106b, is a lattice or mesh or other permeable element. The heat conductor 106, 106a, 106b, may be permeable for e.g. air as described further below with reference to Figure 10.

In a further example the heat conductor 106, 106a, 106b, has access openings (not shown) to allow access to the first and/or second module 101, 102, e.g. for maintenance operations of the battery cells 103, in the examples when the heat conductor 106, 106a, 106b, is arranged on top of the first and/or second module 101, 102. Alternatively, or in addition, the heat conductor 106, 106a, 106b, may be removably positioned across the first and/or second module 101, 102, to allow replacement or removal for maintenance operations.

The heat conductor 106, 106a, 106b, may comprise a plate of material having a thickness in the range of 0.1 - 5 mm. Having the aforementioned thickness in the range of 0.1 - 5 mm provides for a relatively light heat conductor 106, 106a, 106b, yet a significant increase in the thermal conductivity between the first and second modules 101, 102, and the cooling element 105. This provides for a compact battery pack 100 yet a uniform and efficient transfer of heat from the first and second modules 101, 102, to the cooling element 105. In combination with the cooling element 105, which can serve as the main heat sink of the battery pack 100 due to having a significantly higher mass, e.g. by being a structural component and support structure of the housing 104, a particularly efficient and reliable thermal management is obtained while maintaining a compact form factor and reduced weight of the battery pack 100. The heat conductor 106, 106a, 106b, may be easily replaced or temporarily removed as described above. The plate may be L-shaped as exemplified in Fig. 1.

The heat conductor 106, 106a, 106b, may comprise a material having a thermal conductivity above 100 Wm⁻¹K⁻¹. More advantageously the heat conductor 106, 106a, 106b, may comprise a material having a thermal conductivity above 200 Wm⁻¹K⁻¹. The heat conductor 106, 106a, 106b, may be formed of copper, aluminium, silicon carbide, graphite, gold or gold plated metal, or any combinations thereof.

The battery cells 103 may be arranged in an enclosure 111 of the respective first and second modules 101, 102. The heat conductor 106, 106a, 106b may be arranged against an outer surface 112 of the enclosure 111, as schematically shown in e.g. Figure 1. This provides for an efficient transfer of heat from the first and second modules 101, 102, to the heat conductor 106, 106a, 106b. A thermal paste may be arranged between the heat conductor 106, 106a, 106b, and the outer surface 112 in one example. The risk of having air pockets and lowered thermal conductivity may thus be reduced. The enclosure 111 may be in contact with the base 107 of the housing 104, as schematically shown in e.g. Figure 1. Heat may thus also be transferred directly to the base 107 from the enclosure 111.

In one example the battery pack 100 comprises a gap 117 between the heat conductor 106, 106a, 106b, and the enclosure 111, as schematically illustrated in Fig. 10. Cooled air may be circulated in the gap 117 in one example. The heat conductor 106, 106a, 106b, may be air permeable in such a case to allow cooled air to circulate around the heat conductor 106, 106a, 106b. It is conceivable that other cooling mediums may be circulated in the gap 117 or around the heat conductor 106, 106a, 106b, such as a coolant liquid.

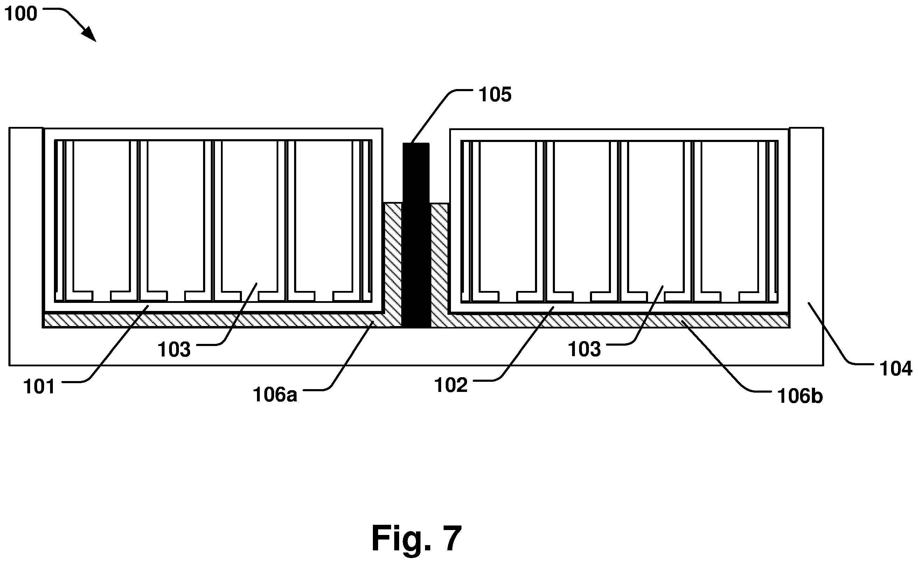

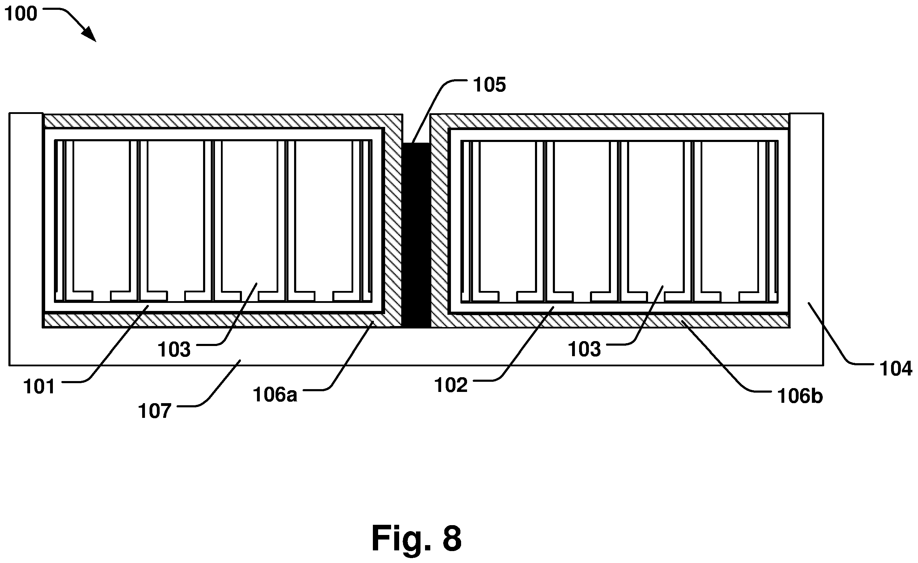

The heat conductor 106a, 106b, may be arranged between the first and second module 101, 102 and the base 107, as schematically exemplified in Fig. 7. The heat conductor 106a, 106b, may thus be arranged under the first and second modules 101, 102, which may be advantageous in some applications of the battery pack 100. In a further example the heat conductor 106a, 106b, is arranged both between the base 107 and the first and/or second module 101, 102, and on top of the first and/or second module 101, 102, as shown in Figure 8. This example further shows a heat conductor 106a, 106b, extending between the cooling element 105 and the first and second module 101, 102, i.e. in a direction parallel with a normal (n) of the plane 108 as described above. The heat conductor 106a, 106b, may thus be essentially U-shaped. This provides for an effective heat transfer from a large portion of the outer surface 112 of the enclosure 111 to the cooling element 105 and to the housing 104.

It is conceivable that the heat conductor 106a, 106b, may surround at least three sides of the first and/or second module 101, 102. The heat conductor 106a, 106b, may surround five sides of the cooling element 105 when arranged across the vertical upright sides of the first and/or second module 101, 102, as well across the top of the first and/or second module 101, 102, i.e. at the upper part 116 of the battery pack 100. The heat conductor 106a, 106b, may surround a further sixth side, between the base 107 and the first and/or second module 101, 102, as described in relation to Figure 8.

Thermal fins 118 may be arranged in the enclosure 111 between the battery cells 103, as schematically illustrated in Fig. 1, to aid the transfer of heat to the enclosure 111 and further on to the heat conductor 106, 106a, 106b. The thermal fins 118 may extend along the length of the battery cells 103 in a direction of the normal (n) and may have angled end portions 119 extending in parallel with the plane 108 where the thermal fins 118 connect to the enclosure 111 to further increase the surface area at this connection point.

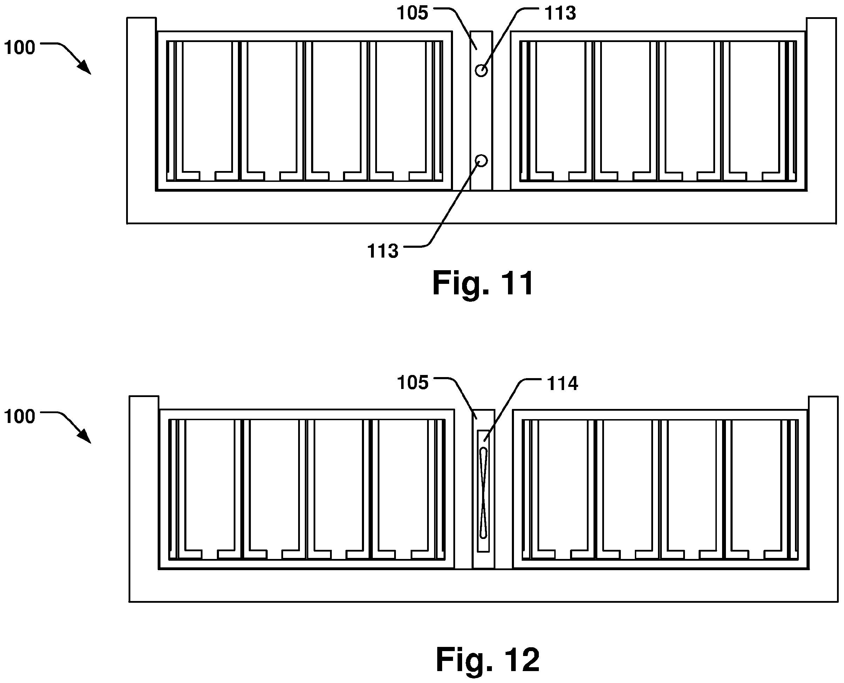

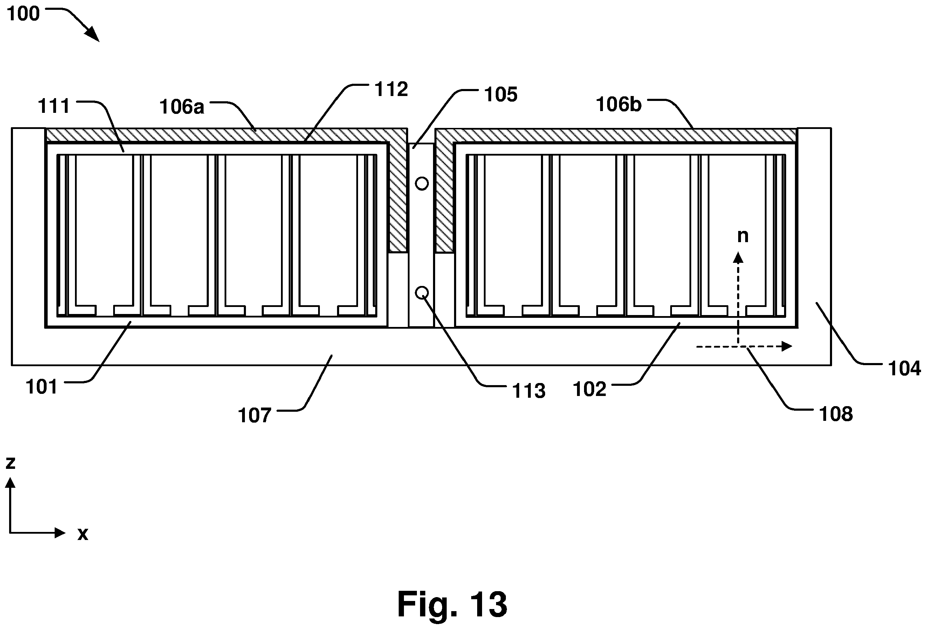

The cooling element 105 may be configured to actively transfer heat away from the first and second modules 101, 102. This provides for increasing the rate of heat transfer in some examples. The cooling element 105 may comprise a conduit 113 for circulating cooling medium in one example, as schematically illustrated in Figure 11. The cooling medium may be a liquid, which may be circulated by a pump (not shown) through the conduit 113. The conduit 113 may communicate with a cooling circuit where the heated liquid is cooled before circulated back to the conduit 113. The cooling medium may be air in one example, which may be pressurized to circulate through the conduit 113. The air may be pressurized by a fan 114 or compressor (not shown). In case the battery pack 100 is provided in a moving vehicle it is conceivable that an airflow through the conduit 113 may be generated by taking inlet air from an air duct of the vehicle. The fan 114 may be arranged on the cooling element 105 in one example, as schematically illustrated in Figure 12. The cooling element 105 may be configured to actively transfer heat away from the first and second modules 101, 102, in combination with a heat conductor 106a, 106b, as described above. Figure 13 shows such examples where heat conductors 106a, 106b, extend across first and second modules 101, 102, and are arranged in contact with an active cooling element 105, e.g. by circulating a cooling medium through a conduit 113.

Even though the above examples have shown the heat conductor 106a, 106b, and the cooling element 105 as separate components it is conceivable that the heat conductor 106a, 106b, and the cooling element 105 may be a single integral component.

An electric vehicle is provided comprising a battery pack 100 as described above in relation to Figures 1 - 13. Incorporating the battery pack 100 in an electric vehicle provides for increasing the safety of operation of such a vehicle due to the improved thermal management provided by the battery pack 100 as described above. The risk of thermal events such as thermal runaway can be reduced. The battery pack 100 can be more readily incorporated into the design of the electric vehicle due to the compact form factor and reduced weight.

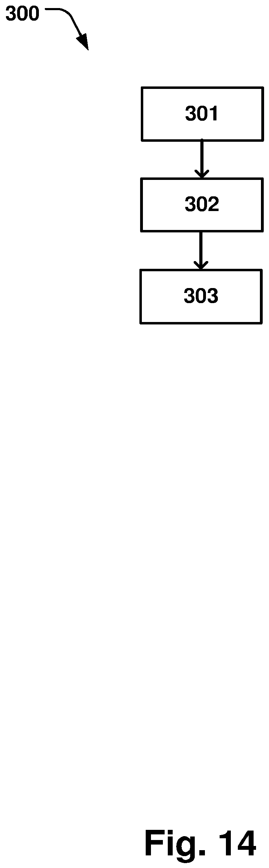

Figure 14 is a flowchart of a method 300 of manufacturing a battery pack 100 comprising a first step 301 of arranging first and second modules 101, 102 with battery cells 103 above a base 107 of a housing 104. The base 107 extends in a plane 108, whereby the first and second modules 101, 102 are at least partly surrounded by the housing 104. The method 300 comprises a second step 302 of arranging a cooling element 105 to extend between the first and second modules 101, 102, and to connect to the housing 104. The method 300 comprises a third step 303 of arranging a heat conductor 106, 106a, 106b, to extend across at least part of the first module 101 and/or the second module 102 and to contact the cooling element 105 to transfer heat to the cooling element 105. The method 300 thus provides for the advantageous benefits as described above for the battery pack 100 in relation to Figures 1 - 13.

In a further aspect a battery pack 100 with active cooling is provided, as schematically exemplified in Figures 11 and 12. The battery pack 100 comprise first and second modules 101, 102, with battery cells 103. The first and second modules 101, 102, are at least partly surrounded by a housing 104 and arranged above a base 107 of the housing 104. The battery pack 100 comprises a cooling element 105 arranged between the first and second modules 101, 102. The cooling element 105 is configured to actively cool the first and second modules 101, 102. The cooling element 105 may comprise a conduit 113 for circulating cooling medium in one example, as schematically illustrated in Figure 11. The cooling medium may be a liquid, which may be circulated by a pump (not shown) through the conduit 113. The conduit 113 may communicate with a cooling circuit where the heated liquid is cooled before circulated back to the conduit 113. The cooling medium may be air in one example, which may be pressurized to circulate through the conduit 113. The air may be pressurized by a fan 114 or compressor (not shown). In case the battery pack 100 is provided in a moving vehicle it is conceivable that an airflow through the conduit 113 may be generated by taking inlet air from an air duct of the vehicle. A fan 114 may be arranged on the cooling element 105 in one example, as schematically illustrated in Figure 12.

In another example two or more examples are combined. Features of one example can be combined with features of other examples.

Examples of the present disclosure have been discussed with particular reference to the examples illustrated. However it will be appreciated that variations and modifications may be made to the examples described within the scope of the disclosure.

## Claims

1. A battery pack (100) comprising:
a housing (104) having a base (107) extending in a plane (108);
first and second modules (101, 102) each having one or more battery cells (103), the first and second modules (101, 102) being at least partly surrounded by the housing (104) and arranged above the base (107);
a cooling element (105) arranged between the first and second modules (101, 102), the cooling element (105) being connected to the housing (104), and
a heat conductor (106, 106a, 106b) arranged to extend across at least part of the first module (101) and/or the second module (102), wherein the heat conductor (106, 106a, 106b) is in contact with the cooling element (105) to transfer heat to the cooling element (105).

2. Battery pack (100) according to claim 1, wherein the cooling element (105) is a support structure for the first and second modules (101, 102), and/or a support structure for the housing (104).

3. Battery pack (100) according to claim 1 or 2, wherein the cooling element (105) is configured for passive transfer of heat away from the first and second modules (101, 102).

4. Battery pack (100) according to any of claims 1 - 3, wherein the cooling element (105) extends along a first direction (x) parallel to the plane (108) and along a second direction (y) parallel to the plane (108), the second direction being perpendicular to the first direction.

5. Battery pack (100) according to claim 4, wherein the cooling element (105) extends around at least two sides (101a, 101b) of the first module (101) and/or the second module (102).

6. Battery pack (100) according to any of claims 1 - 5, wherein the cooling element (105) is connected to the base (107) and extends along the first module (101) and/or the second module (102) in parallel with a normal (n) of the plane (108).

7. Battery pack (100) according to any of claims 1 - 6, wherein the cooling element (105) extends between opposite sides (104a, 104b) of the housing (104).

8. Battery pack (100) according to any of claims 1 - 7, wherein the cooling element (105) is arranged at opposite sides (102a, 102b) of the first module (101) and/or the second module (102).

9. Battery pack (100) according to any of claims 1 - 8, wherein the first and second modules (101, 102) are arranged between the heat conductor (106, 106a, 106b) and the base (107).

10. Battery pack (100) according to any of claims 1 - 9, wherein the heat conductor (106a, 106b) is arranged between the first and second module (101, 102) and the base (107).

11. Battery pack (100) according to any of claims 1 - 10, wherein the heat conductor (106, 106a, 106b) extends in a first longitudinal direction (109) across the first module (101) and/or the second module (102), parallel to the plane (108), and in a second longitudinal direction (110) between the first module (101) and/or the second module (102) and the cooling element (105), the second longitudinal direction (110) is perpendicular to the first longitudinal direction (109) and parallel to a normal (n) of the plane (108).

12. Battery pack (100) according to any of claims 1 - 11, wherein the battery cells (103) are arranged in an enclosure (111) of the respective first and second modules (101, 102), the heat conductor (106, 106a, 106b) is arranged against an outer surface (112) of the enclosure (111).

13. Battery pack (100) according to any of claims 1 - 12, wherein the heat conductor (106, 106a, 106b) comprises a plate of material having a thickness in the range of 0.1 - 5 mm.

14. Battery pack (100) according to any of claims 1 - 13, wherein the heat conductor (106, 106a, 106b) comprises a material having a thermal conductivity above 100 Wm⁻¹K⁻¹

15. Battery pack (100) according to any of claims 1 - 14, wherein the cooling element (105) is configured to actively transfer heat away from the first and second modules (101, 102).

16. Battery pack (100) according to claim 15, wherein the cooling element (105) comprises conduit (113) for circulating cooling medium.

17. An electric vehicle comprising a battery pack according to any of claims 1 to 16.

18. A method (300) of manufacturing a battery pack (100) comprising arranging (301) first and second modules (101, 102) with battery cells (103) above a base (107) of a housing (104), the base (107) extending in a plane (108), whereby the first and second modules (101, 102) are at least partly surrounded by the housing (104),
arranging (302) a cooling element (105) to extend between the first and second modules (101, 102) and to connect to the housing (104), and
arranging (303) a heat conductor (106, 106a, 106b) to extend across at least part of the first module (101) and/or the second module (102) and to contact the cooling element (105) to transfer heat to the cooling element (105).

19. A battery pack (100) comprising
first and second modules (101, 102) with battery cells (103), the first and second modules (101, 102) being at least partly surrounded by a housing (104) and arranged above a base (107) of the housing (104), and
a cooling element (105) arranged between the first and second modules (101, 102),
wherein the cooling element (105) is configured to actively cool the first and second modules (101, 102).
